# EUROPEAN PATENT SPECIFICATION

(11) **EP 0 937 627 B1**
(45) Date of publication and mention of the grant of the patent: **08.05.2002**
(21) Application number: 99103323.4
(22) Date of filing: 19.02.1999
(51) Int. Cl.: B62D 1/28, F16H 59/58, G05D 1/02

(54) **Automatic steering system for vehicle**
Automatisches Lenksystem für ein Fahrzeug
Système de direction automatique pour un véhicule

(30) Priority: 23.02.1998 JP 4060498
(43) Date of publication of application: 25.08.1999
(73) Proprietor: HONDA GIKEN KOGYO KABUSHIKI KAISHA, Minato-ku Tokyo (JP)
(72) Inventor: Kawashima, Mitsunori, K.K. Honda Gijutsu Kenkyusho, Wako-shi, Saitama (JP)
(74) Representative: Prechtel, Jörg, Dipl.-Phys. Dr.

(56) References cited:
- DE-A- 3 435 869
- GB-A- 2 304 934
- US-A- 4 931 930
- US-A- 5 522 779

## Description

### BACKGROUND OF THE INVENTION

### 1. FIELD OF THE INVENTION

The present invention relates to an automatic steering system for a vehicle for parking the vehicle automatically without recourse to the steering operation by a driver.

### 2. DESCRIPTION OF THE RELATED ART

Such automatic steering systems for vehicles are already known from Japanese Patent Application Laid-open Nos.3-74256 and 4-55168. These automatic steering systems for vehicles utilize an actuator for a conventionally well-known electric power steering device, and are designed so that a back parking and a linear parking are automatically carried out by controlling the actuator based on the relationship between a distance of movement of the vehicle and a steering angle which have previously been stored.

In the conventionally known automatic steering system for the vehicle, while the driver operates a brake pedal or an accelerator pedal to control the vehicle speed, the wheels are steered automatically by the actuator for the electric power steering device. However, the automatic parking is conducted at a lower speed, so that during forward traveling of the vehicle, the shift stage of an automatic transmission is a first shift stage, and when the driver mis-operates the accelerator pedal, if the friction coefficient of a road surface is lower, there is a possibility that the driving torque for the wheels may be excessive to produce slipping in the wheels. When the wheels slip during the automatic steering control in this manner, the vehicle may deviate from an original locus of movement and cannot be moved precisely to a target position in some cases.

US-A-49 31 930 discloses an automatic steering system according to the preamble of claim 1.

### SUMMARY OF THE INVENTION

Accordingly, it is an object of the present invention to ensure that the wheels are prevented from slipping at an excessive driving torque during automatic steering control, thereby preventing the vehicle from deviating from the locus of movement.

To achieve the above object, according to a first aspect and feature of the present invention, there is provided an automatic steering system for a vehicle, comprising a movement locus determining means adapted to store or calculate a locus of movement of the vehicle to a target position, an actuator for steering wheels, an actuator control means for controlling the driving of the actuator based on the locus of movement stored or calculated by the movement locus determining means, an automatic transmission which has a plurality of shift stages and automatic switch-over is carried out between the shift stages, and a shift control means adapted to set the shift stage of the automatic transmission at any shift stage other than the lowest shift stage, when the actuator control means is controlling the driving of the actuator based on the locus of movement, according to claim 1.

With the above arrangement, even when the driver excessively depresses the accelerator pedal during the automatic steering control in which the actuator is driven based on the locus of movement, the shift stage of the automatic transmission is set at any shift stage other than the lowest shift stage. Therefore, the increase in driving torque for the wheels to a level more than required can be suppressed to prevent the slipping, thereby effectively preventing the deviating of the vehicle from the locus of movement.

According to a preferred aspect of the present invention, said automatic transmission has a plurality of shift stages including low and medium shift stages having reduction ratios and a high shift stage having speed-increasing ratio and automatic switch-over is carried out between the plurality of shift stages, and said shift control means is adapted to set the shift stage of the automatic transmission to the medium shift stage, when the actuator control means is controlling the driving of the actuator based on the locus of movement.

With the above arrangement, even when the driver excessively depresses the accelerator pedal during the automatic steering control in which the actuator is driven based on the locus of movement, the shift stage of the automatic transmission is set at the medium shift stage. Therefore, it is possible to prevent the shift stage of the automatic transmission from becoming the low shift stage to cause the wheels to slip at an excessive driving torque, or the shift stage of the automatic transmission from becoming the high shift stage to cause the vehicle to be incapable of being moved due to an insufficient driving torque. Thus, it is possible to effectively prevent the vehicle from deviating from the locus of movement.

In addition to the first or second feature, if the movement locus determining means stores or calculates the locus of movement as the relationship of a steering angle of the wheels to a distance of movement of the vehicle, a constant locus of movement can always be ensured, even if the vehicle speed varies during the automatic steering control.

The above and other objects, features and advantages of the invention will become apparent from the following description of the preferred embodiment taken in conjunction with the accompanying drawings.

### BRIEF DESCRIPTION OF THE DRAWINGS

Figs.1 to 4 show an embodiment of the present invention, wherein
Fig.1 is an illustration of the entire arrangement of a vehicle provided with an automatic steering system;
Fig.2A is a diagram showing a locus of movement in a back parking/left mode;
Fig.2B is a diagram showing the reference steering angle in the back parking/left mode;
Fig.3 is a diagram showing a mode selecting switch and an automatic parking starting switch; and
Fig.4 is a flow chart for explaining the operation.

### DETAILED DESCRIPTION OF THE PREFERRED EMBODIMENT

The present invention will now be described by way of an embodiment with reference to the accompanying drawings.

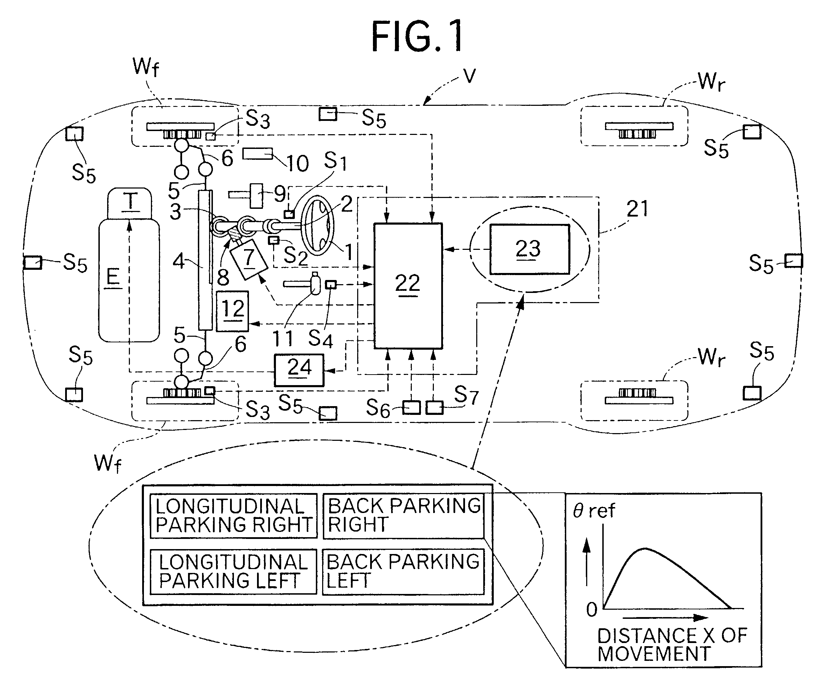

As shown in Fig.1, a vehicle V includes a pair of front wheels Wf, Wf and a pair of rear wheels Wr, Wr. A steering wheel 1 and the front wheels Wf, Wf steered vechicle wheels are connected to each other by a steering shaft 2 rotated with the steering wheel 1, a pinion 3 provided at a lower end of the steering shaft 2, a rack 4 meshed with the pinion 3, left and right tie rods 5, 5 mounted at opposite ends of the rack 4, and left and right knuckles 6, 6 connected to the tie rods 5, 5. A steering actuator 7 comprising an electric motor is connected to the steering shaft 2 through a worm gear mechanism 8, in order to assist in a driver's operating the steering wheel 1, or to conduct an automatic steering for garaging of the vehicle (which will be described hereinafter).

A steering control unit 21 is comprised of a control section 22 and a memory section 23. The control section 22 constitutes an actuator control means of the present invention. Inputted to the control section 22 are signals from a steering angle detecting means S₁ for detecting a steering angle θ of the front wheels Wf, Wf based on a rotational angle of the steering wheel 1, a steering torque detecting means S₂ for detecting a steering torque of the steering wheel 1, front wheel rotational angle detecting means S₃, S₃ for detecting rotational angles of the left and right front wheels Wf, Wf, a shift position detecting means S₄ for detecting a shift position selected by a select lever 11 (a "D" position, an "R" position, an "N" position, a "P" position, a "third shift" position, a "second shift" position, a "first shift position, or the like), and eight object detecting means S₅ mounted at a front portion, a central portion and a rear portion of the vehicle V. The object detecting means S₅ is comprised of publicly known sonar, radar, television camera or the like. Lines connecting the eight object detecting means S₅ and the control section 22 are not shown for the purpose of preventing the complication of the drawings.

The front wheel rotational angle detecting means S₃, S₃ are adapted to output pulses every time the front wheels Wf, Wf are rotated through a predetermined angle. A distance X of movement of the vehicle V can be calculated by multiplying the number of pulses detected by a constant determined in accordance with the radius of the front wheels Wf, Wf.

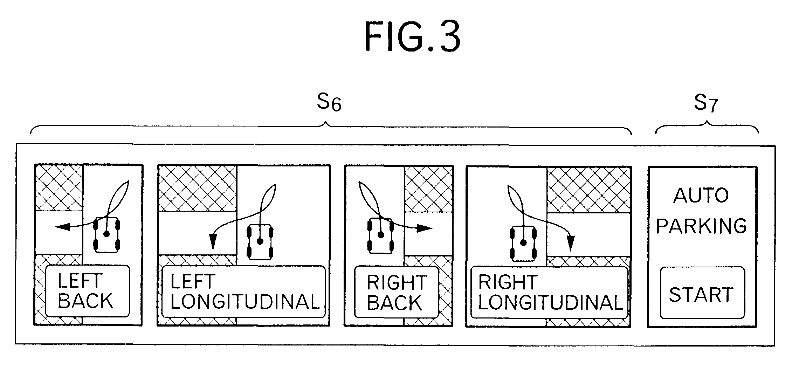

Further, a mode selecting switch S₆ operated by the driver and an automatic parking starting switch S₇ are connected to the control section 22. As can be seen from Fig.3, the mode selecting switch S₆ is operated to select any of four parking modes, i.e., a back-parking/right mode, a back-parking/left mode, a longitudinal parking/right mode and a longitudinal parking/left mode, and includes four switch buttons corresponding to the modes, respectively. The automatic parking starting switch S₇ is operated to start automatic parking in any mode selected by the mode selecting switch S₆.

The memory section 23 constitutes a movement locus determining means of the present invention, and data for the four parking modes, i.e., relationships of reference steering angles θref to distances X of movement of the vehicle V are previously stored in a table in the memory section 23.

The control section 22 controls the operation of the steering actuator 7 and the operation of an operation stage display device 12 including a liquid crystal monitor, a loudspeaker, a lamp, a chime, a buzzer or the like, based on the signals from the detecting means S₁ to S₅, the switches S₆ and S₇ and the data for the parking modes stored in the memory section 23.

An automatic transmission T mounted at a front portion of a vehicle body integrally with an engine E has gear shift stages: four forward stages and one backward stage. The gear shift stage of the automatic transmission T is controlled by a gear shift control device 24 constituting a gear shift control means of the present invention. In a normal operation, i.e., when the automatic steering control operation is not carried out, the gear shift control device 24 controls the gear shift stage of the automatic transmission T based on a shift position selected by the select lever 11, an accelerator opening degree, a vehicle speed and the like. During the automatic steering control operation, the gear shift control device 24 controls the gear shift stage of the automatic transmission T based on a command from the control section 22.

The operation of the embodiment of the present invention having the above-described arrangement will be described below.

In the normal operation (the automatic parking starting switch S₇ is not on, i.e., when the automatic steering control operation is not carried out, the steering control unit 21 functions as a general power steering control unit. More specifically, when the driver operates the steering wheel 1 to turn the vehicle V, the steering torque detecting means S₂ detects a steering torque inputted to the steering wheel 1, and the control section 22 controls the driving of the steering actuator 7 based on the steering torque. As a result, the left and right front wheels Wf, Wf are steered by the driving force of the steering actuator 7, whereby the steering operation of the driver is assisted.

The content of the automatic parking control operation will now be described taking as an example a back parking/left mode (mode in which the vehicle V is parked in a parking position on the left of the vehicle V as the vehicle is moved backwards).

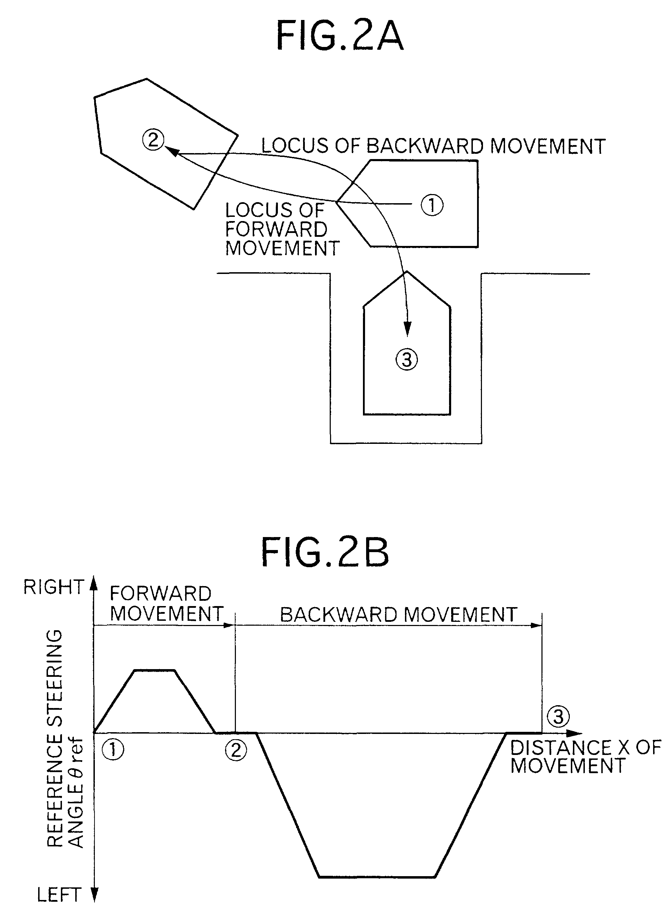

First, as shown in Fig.2A, the vehicle V is moved to a position in the vicinity of a garage in which the vehicle V is to be parked, and stopped in a position (a starting position 1) in which a predetermined reference (for example, a mark provide on an inner side of a door, or a left-hand side mirror) is aligned with a center line of the garage with the left side of the vehicle body as close as possible to an entrance line of the garage. Then, when the mode selecting switch S₆ is operated to select the back parking/left mode and the automatic parking starting switch S₇ is operated, the automatic steering control operation is started. While the automatic steering control operation is carried out, the actual position of the vehicle, obstacles around the vehicle, the parking position, a predicted locus of movement of the subject vehicle from the starting position to the parking position, a reversing position in which the forward movement of the vehicle is changed to the backward movement thereof and the like, are displayed on the operation stage display unit 12, and various kinds of instruction for the operation of the select lever 11 in the reversing position 2 and alarms are given vocally from the loudspeaker to the driver.

The automatic steering control operation causes the front wheels Wf, Wf to be automatically steered based on the data for the back parking/left mode selected by the mode selecting switch S₆ only by loosing the brake pedal 9 by the driver to move the vehicle in a creep travel, or only by depressing the accelerator pedal 10 by the driver to move the vehicle in a creep travel, even if the steering wheel 1 is not operated. Namely, while the vehicle V travels forwards from the starting position 1 to the reversing position 2, the front wheels Wf, Wf are steered rightwards automatically, and while the vehicle V travels backwards from the reversing position 2 to a target position 3, the front wheels Wf, Wf are steered leftwards automatically.

As is clear from Fig.2B, while the automatic steering operation is carried out, the control section 22 searches a reference steering angle θref by utilizing the distance X of movement of the vehicle V calculated based on the outputs from the front wheel rotational angle detecting means S₃, S₃ to the data for the back parking/left mode read from the memory section 23. Then, the control section calculates a deviation E (= θref - θ) based on the reference steering angle θref and the steering angle θ inputted from the steering angle detecting means S₁, and controls the operation of the steering actuator 7, so that the deviation E becomes zero. In this case, since the data of the reference steering angle θref is set to correspond to the distance X of movement of the vehicle V, the vehicle V always travels along the above-described locus of movement, so far as the distance X of movement of the vehicle V has been detected precisely, even when the vehicle speed is varied slightly during the automatic steering control operation.

The above-described automatic steering control operation is canceled when the driver turns OFF the mode selecting switch S₆. Further, the automatic steering control operation is canceled and restored to the usual power steering control in following cases in addition to the above case: when the driver has operated the steering wheel 1, when any of the object detecting means S₅ has detected an obstacle, and when the vehicle speed has exceeded a predetermined value.

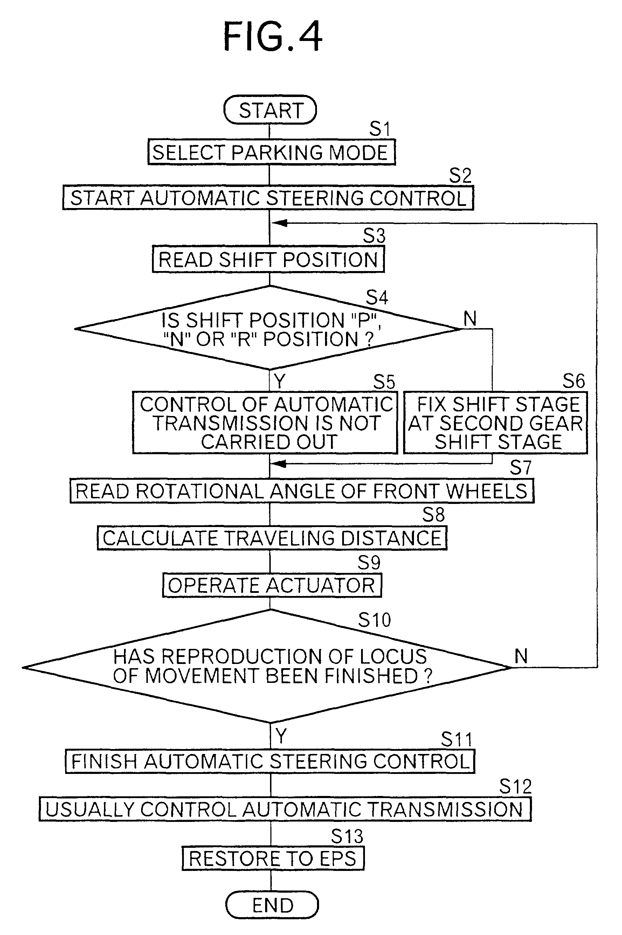

In the normal operation, i.e., when the automatic steering operation is not carried out, the shift stage of the automatic transmission is controlled in accordance with the shift position, the accelerator opening degree, the vehicle speed and the like. During the automatic steering operation, the shift stage of the automatic transmission is controlled based on the command outputted from the control section 22 to the gear shift control device 24. The operation for controlling the shift stage of the automatic transmission T will be described below with reference to the flow chart in Fig.4.

First, when the driver operates any one of the mode selecting switches S₆ to select any one of the parking modes at Step S1 and turns ON the automatic parking starting switch S₇ at Step S2, the automatic steering control operation is started. At subsequent Step S3, the shift position selected by the select lever 11 is read from the shift position detecting means S₄. If the shift position is the "P" position, the "N" position or the "R" position at Step S4, i.e., is not the forward shift positions (the "D" position, the "third shift" position, the "second shift" position and the "first shift" position), the processing is advanced to Step S5, and the special control of the automatic transmission T is not carried out. On the other hand, if the shift position is not any of the "P" position, the "N" position or the "R" position at Step S4, i.e., is any of the forward shift positions, the processing is advanced to Step S6, at which the shift stage of the automatic transmission T is forcibly fixed at the second shift stage.

Then, at Step S7, the rotational angles of the front wheels Wf, Wf are read from the front wheel rotational angle detecting means S₃, S₃, and at Step S8, the distance X of movement of the vehicle V is calculated from the rotational angles of the front wheels Wf, Wf. At Step S9, the operation of the steering actuator 7 is controlled based on the locus of movement searched from the distance X of movement and continued until the reproduction of the locus of movement is finished at Step S10. When the reproduction of the locus of movement is finished at Step S10, whereby the vehicle V reaches the target position 3 (see Fig.2A), the automatic steering control is finished at Step S11. The automatic transmission T is restored to the usual shifting control at Step S12, and the steering actuator 7 is restored to the normal power steering control at Step S13.

As described above, when the shift position is any of the forward shift positions during the automatic steering control, e.g., when the vehicle V travels forwards from the starting position 1 to the reversing position 2 in Fig.2A, the shift position of the automatic transmission T is forcibly fixed at the second shift position. Therefore, even if the driver over-depresses the accelerator pedal 10, or even when the friction coefficient of a road surface is smaller, the driving torque is excessive to prevent the slipping from being produced. As a result, it is possible to prevent an error from being produced in the reference steering angle θref read based on the distance X of movement of the vehicle V to precisely guide the vehicle V to the target position 3.

Although the embodiment of the present invention has been described in detail, it will be understood that the present invention is not limited to the above-described embodiment, and various modifications in design may be made without departing from the spirit and scope of the invention defined in claims.

For example, the locus of movement of the vehicle V to the target position is previously stored in the memory section 23 in the embodiment, but may be calculated from the actual position and the target position of the vehicle V.

In addition, the shift position is fixed at the second gear shift stage during the automatic steering control in the embodiment, but can be fixed at the third or fourth gear shift stage in an automatic transmission T having four forward shift stages, or can be fixed at the third, fourth or fifth gear shift stage in an automatic transmission T having five forward shift stages. Further, the gear shifting can be conducted among the second, third and fourth gear shift stages in the automatic transmission T having four forward shift stages, or can be conducted among the second, third, fourth and fifth gear shift stages in the automatic transmission T having five forward shift stages.

However, when the higher shift stage (e.g., the fifth shift stage) has a speed increase ratio, the driving torque is insufficient, so that the vehicle V cannot travel. For this reason, the shift stage cannot be fixed at such higher shift stage, and is fixed at any medium shift stage (any of the second, third and fourth shift stages) except for the lowest shift stage (first shift stage) of which reduction ratio is maximum in the plurality of shift stages having reduction ratios, or the gear shifting is conducted among the medium shift stages. Further, the automatic transmission T in the embodiment has the single backward shift stage, but when the automatic transmission T has multiple backward shift stages, the shift stage can be set at any backward shift stage other than the lowest shift stage during the automatic steering control in the backward movement.

If the shift position detected by a shift position detecting device (S₄) during an automatic steering control for garaging of a vehicle is a forward shift position other than a "P" position, an "N" position and an "R" position, a shifting control device (24) forcibly fixes the shift stage of an automatic transmission (T) at a second shift stage by a command from a control section (22) of a steering control unit (21). Even when a driver over-depresses an accelerator pedal (10) during the automatic steering control in which a steering actuator (7) is driven based on a locus of movement stored in a memory section (23), an increase in the driving torque for wheels can be suppressed by fixing the shift stage at the second shift stage to prevent slipping of the wheels, thereby preventing the vehicle (V) from deviating from the locus of movement.

## Claims

1. An automatic steering system for a vehicle (V), comprising a movement locus determining means (23) adapted to store or calculate a locus of movement of the vehicle to a target position, an actuator (7) for steering wheels (Wf), an actuator control means (22) for controlling the driving of said actuator based on the locus of movement stored or calculated by said movement locus determining means, an automatic transmission (T) which has a plurality of shift stages and automatic switch-over is carried out between said shift stages, and a shift control means (24), **characterized in that** said shift control means (24) is adapted to set the shift stage of said automatic transmission to any shift stage other than the lowest shift stage, when said actuator control means is controlling the driving of said actuator based on said locus of movement.

2. An automatic steering system for a vehicle according to claim 1, wherein said automatic transmission (T) has low and medium shift stages having reduction ratios and a high shift stage having a speed-increasing ratio and automatic switch-over is carried out between said plurality of shift stages, and said shift control means (24) is adapted to set the shift stage of said automatic transmission to said medium shift stage, when said actuator control means is controlling the driving of said actuator based on said locus of movement.

3. An automatic steering system for a vehicle according to claim 1 or 2, wherein said movement locus determining means (23) stores or calculates said locus of movement as the relationship of a steering angle (θ) of the wheels (Wf) to a distance (X) of movement of the vehicle.

## Patentansprüche

1. Automatisches Lenksystem für ein Fahrzeug (V), umfassend: ein Ortskurven-Bestimmungsmittel (23), das dazu ausgelegt ist, eine Ortskurve des Fahrzeugs zu einer Zielposition zu speichern oder zu berechnen, einen Aktuator (7) zum Lenken von Rädern (Wf), ein Aktuatorsteuermittel (22) zum Steuern/Regeln des Antriebs des Aktuators auf der Basis der Ortskurve, die von dem Ortskurven-Bestimmungsmittel gespeichert oder berechnet ist, ein Automatikgetriebe (T), das eine Mehrzahl von Schaltstufen aufweist und in dem ein automatisches Umschalten zwischen den Schaltstufen ausgeführt wird, sowie ein Schaltsteuermittel (24), **dadurch gekennzeichnet, dass** das Schaltsteuermittel (24) dazu ausgelegt ist, die Schaltstufe des Automatikgetriebes auf irgendeine andere Schaltstufe als die niedrigste Schaltstufe zu stellen, wenn das Aktuatorsteuermittel den Antrieb des Aktuators auf der Basis der Ortskurve steuert/regelt.

2. Automatisches Lenksystem für ein Fahrzeug nach Anspruch 1, worin das Automatikgetriebe (T) eine niedrige und eine mittlere Schaltstufe mit Untersetzungsverhältnissen sowie eine hohe Schaltstufe mit einem Übersetzungsverhältnis aufweist und das automatische Umschalten zwischen der Mehrzahl von Schaltstufen ausgeführt wird, wobei das Schaltsteuermittel (24) dazu ausgelegt ist, die Schaltstufe des Automatikgetriebes auf die mittlere Schaltstufe zu stellen, wenn das Aktuatorsteuermittel den Betrieb des Aktuators auf der Basis der Ortskurve steuert/regelt.

3. Automatisches Lenksystem für ein Fahrzeug nach Anspruch 1 oder 2, worin das Ortskurven-Bestimmungsmittel (23) die Ortskurve als Beziehung eines Lenkwinkels (θ) der Räder (Wf) und einer Fahrwegstrecke (X) des Fahrzeugs speichert oder berechnet.

## Revendications

1. Système de direction automatique destiné à un véhicule (V), comprenant un moyen (23) de détermination du lieu de déplacement apte à stocker ou à calculer un lieu de déplacement du véhicule jusqu'à un emplacement cible, un actionneur (7) destiné à des roues directrices (Wf), un moyen de commande (22) d'actionneur destiné à commander l'entraînement dudit actionneur sur la base du lieu de déplacement stocké ou calculé par ledit moyen de détermination de lieu de déplacement, une transmission automatique (T) qui comporte une pluralité d'étages de changement de vitesse et dans laquelle une changement automatique est exécutée entre lesdits étages de changement de vitesse, et un moyen (24) de commande de changement de vitesse, **caractérisé en ce que** ledit moyen de commande (24) de changement de vitesse est apte à fixer le rapport de changement de vitesse de ladite transmission automatique à n'importe quel rapport de changement de vitesse autre que l'étage de changement de vitesse le plus bas, lorsque ledit moyen de commande d'actionneur commande l'entraînement dudit actionneur sur la base dudit lieu de déplacement.

2. Système de direction automatique destiné à un véhicule selon la revendication 1, dans lequel ladite transmission automatique (T) comporte des étages de changement de vitesse bas et moyen consistant en des rapports de réduction et un étage de changement de vitesse haut consistant en un rapport d'augmentation de vitesse et un changement de vitesse automatique est exécuté entre ladite pluralité d'étages de changement de vitesse, et ledit moyen (24) de commande de changement est apte à fixer l'étage de changement de vitesse de ladite transmission automatique audit étage de changement de vitesse moyen, lorsque ledit moyen de commande de l'actionneur est en train de commander l'entraînement dudit actionneur sur la base dudit lieu de déplacement.

3. Système de direction automatique destiné à un véhicule selon la revendication 1 ou 2, dans lequel ledit moyen (23) de détermination de lieu de déplacement stocke ou calcule ledit lieu de déplacement sous forme de la relation entre un angle (θ) de direction des roues (Wf) et une distance (X) de déplacement du véhicule.
